# EUROPEAN PATENT SPECIFICATION

(11) **EP 3 552 858 B1**
(45) Date of publication and mention of the grant of the patent: **28.02.2024**
(21) Application number: 18305426.1
(22) Date of filing: 10.04.2018
(51) Int. Cl.: B60L 50/50, B60L 53/16, B60L 53/22, B60L 53/30, H01R 13/00, B60L 1/00

(54) **CHARGER PLUG FOR AN ELECTRIC VEHICLE CHARGING STATION, SAID CHARGING STATION COMPRISING SAID CHARGER PLUG AND A CHARGING RECEIVER FOR AN ELECTRIC VEHICLE**
LADESTECKER FÜR EINE ELEKTRISCHE FAHRZEUGLADESTATION, WOBEI DIE LADESTATION DEN LADESTECKER UND EINEN LADEEMPFÄNGER FÜR EIN ELEKTROFAHRZEUG UMFASST
PRISE DE CHARGEUR POUR STATION DE CHARGE DE VÉHICULE ÉLECTRIQUE, LADITE STATION DE CHARGE COMPRENANT LADITE PRISE DE CHARGEUR ET RÉCEPTEUR DE CHARGE POUR VÉHICULE ÉLECTRIQUE

(43) Date of publication of application: 16.10.2019
(73) Proprietor: HAGER-ELECTRO SAS, 67210 Obernai (FR); Hager Electro GmbH & Co. KG, 66440 Blieskastel (DE)
(72) Inventor: Haenel, Frédéric, 67290 Lohr (FR); Kauffmann, Bruno, 67210 Dachstein (FR); Kraemer, Jacques, 67000 Strasbourg (FR); Meyer, Loic, 67114 Eschau (FR); Reiner, Ulrich, 67691 Hochspeyer (DE); Schmitt, Erwin, 67659 Kaiserlautern (DE); Simon, Michel, 60800 Dessenheim (FR)
(74) Representative: Cabinet Nuss

(56) References cited:
- WO-A1-2017/162651
- US-A1- 2013 267 115
- US-A1- 2018 013 180

## Description

The invention relates to the field of electric vehicles. More specifically, the invention relates to a charging station comprising a charger plug.

The document US 2017/0096073 A1 discloses an underground system of a charging station that provides electric charging and cooling of an electric vehicle. This underground system is configured to provide both electric charging and thermal conditioning of the electric vehicle and therefore has an electric line and a fluid line. The electric line is coupled to an electric connector and the fluid line is coupled to a fluid connector. The electric vehicle comprises a fluid connector that can be connected to the fluid connector of the underground system and an electric connector that can be connected to the electric connector of the underground system.

The document US2013/267115 relates to an electrical connection comprising an electrical connector connected to an electrical conductor assembly being able to be cooled with a flow of heat transfer medium flowing through the electrical connector.

The document WO2017/162651 discloses a power contact system for a charging plug and/or a charging socket, comprising at least one power contact with a first connection region for electrically conductive connection to an electrical energy receiver and with a second connection region for electrically conductive connection to a charging cable, and at least one cooling element in direct contact with the second connection region.

The aim of the invention is to propose an improved and reliable fluid and electric connection solution.

For this purpose, the present invention relates to a charging station comprising a charger plug for supplying electric energy to an electric vehicle and for supplying cooling of the electric vehicle, the charger plug comprising at least a first electric connector comprising a first electric contact and at least a second electric contact, the first electric connector being arranged to be coupled with a corresponding second electric connector of a charging receiver, so that the first and second electric contacts being electrically connected with corresponding first and second electric contacts of the second electric connector, and comprising a first fluid connector comprising a first fluid inlet duct and a second fluid outlet duct, the first fluid connector being arranged to be coupled with a corresponding second fluid connector of the charging receiver, so that the first fluid inlet duct being connected with a corresponding third fluid outlet duct of the second fluid connector and that the second fluid outlet duct being connected with a corresponding fourth fluid inlet duct of the second fluid connector, the first electric contact being located on a first protrusion and the second electric contact being located on a second protrusion, the first fluid inlet duct passing through the first protrusion and the second fluid outlet duct passing through the second protrusion,
charging station characterized in that it comprises a protection housing arranged to protect the charger plug, the protection housing comprising a first protection lid and a second protection lid arranged to be movable between a closed position and an open position, the first protection lid and the second protection lid being arranged to move from the closed position to the open position when the first protrusion and the second protrusion lean against the first protection lid and the second protection lid respectively and wherein the first protection lid and the second protection lid comprise respectively first cleaning means and second cleaning means provided to clean the first and second electric contacts, when the charger plug is moved outside the protection housing.

The invention will be better understood using the description below, which relates to at least one preferred embodiment, given by way of non-limiting examples and explained with reference to the accompanying drawings, in which
- figure 1 shows a charging station comprising a charger plug and a charging receiver which is suitable for an electric vehicle in cross section,
- figure 2 shows a charging station according to a non-limitative specificity of the invention, comprising a charger plug enclosed in a protection housing of the charging station in cross section,
- figure 3 shows the charging station of figure 2 and the charging receiver, the charging receiver and the charger plug being in a decoupled state,
- figure 4 shows the charging station of figure 2 and the charging receiver, the charging receiver and the charger plug being in a coupled state,
- figure 5 shows a charging station comprising a charger plug and a charging receiver according to a preferred embodiment, the charging receiver and the charger plug being in a decoupled state.

The figures show a charger plug 2 for supplying electric energy to an electric vehicle (not shown) and for supplying cooling of the electric vehicle, the charger plug 2 comprising at least a first electric connector 4 comprising a first electric contact 5 and at least a second electric contact 5', the first electric connector 4 being arranged to be coupled with a corresponding second electric connector 7 of a charging receiver 8 so that the first and second electric contacts 5, 5' being electrically connected with corresponding first and second electric contacts 6, 6' of the second electric connector 7, and comprising a first fluid connector 9 comprising a first fluid inlet duct 10 and a second fluid outlet duct 11, the first fluid connector 9 being arranged to be coupled with a corresponding second fluid connector 12 of the charging receiver 8, so that the first fluid inlet duct 10 being connected with a corresponding third fluid outlet duct 13 of the second fluid connector 12 and that the second fluid outlet duct 11 being connected with a corresponding fourth fluid inlet duct 14 of the second fluid connector 12.

The first electric contact 5 is located on a first protrusion and the second electric contact 5' is located on a second protrusion, the first fluid inlet duct 10 passing through the first protrusion and the second fluid outlet duct 11 passing through the second protrusion.

This arrangement enables the simultaneous connections of the first electric connector 4 and of the first fluid connector 9 of the charger plug 2 respectively with the second electric connector 7 and the second fluid connector 12 of the charging receiver 8. Thus, the charger plug 2 enables an improved and reliable connection. Moreover, as one electric contact 5, 5' and one fluid inlet/outlet duct 10, 11 are located on the same protrusion, the size of the charger plug 2 is decreased and thus the charger plug 2 is compact. In addition, this arrangement enables to cool the first and second electric contacts 5, 5' of the charger plug 2. Thus, when the charger plug 2 is connected to the charging receiver 8 the first and second electric contacts 6, 6' of the charging receiver 8 is cooled by the first and second electric contacts 5, 5'.

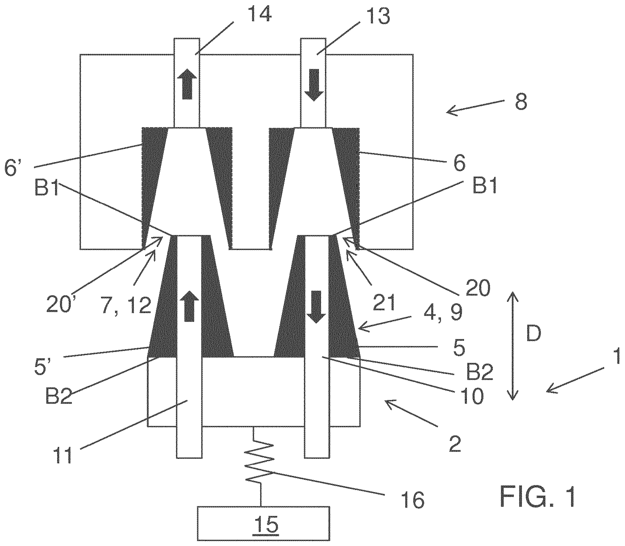

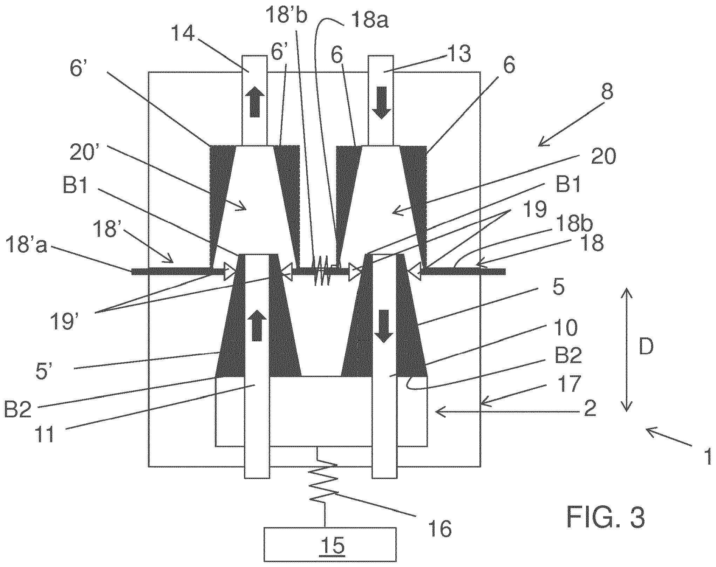

Preferably, the first fluid inlet duct 10 and the second fluid outlet duct extend in the insertion direction D (figures 1, 3 and 5).

According to a preferred embodiment of the invention, the first protrusion has a truncated cone shape and the second protrusion has a truncated cone shape.

This particular shape of the first and second protrusions is provided to ease the insertion of the first electric connector 4 and of the first fluid connector 9 in the corresponding first and second recesses 20, 20' of the charging receiver 8, described hereinafter.

Preferably, the first fluid inlet duct 10 leads to the bases B1, B2 of the truncated cone.

Preferably, the second fluid outlet duct 11 leads to the bases B1, B2 of the truncated cone.

Preferably, the first electric contact 5 covers the external wall of the first protrusion.

Preferably, the second electric contact 5' covers the external wall of the second protrusion.

According to a preferred embodiment of the invention, the first fluid inlet duct 10 and the second fluid outlet duct 11 have a hollow cylindrical shape.

According to a preferred embodiment of the invention, the truncated cone shaped first protrusion and the hollow cylindrical shaped first fluid inlet duct 10 are coaxial and the truncated cone shaped second protrusion and the hollow cylindrical shaped second fluid outlet duct 11 are coaxial (figures 1 to 5).

This arrangement enables a uniform cooling of the first electric contact 5 and of the second electric contact 5'.

In a preferred embodiment (not shown), the charger plug 2 comprises a first electric connector 4 comprising a first electric contact, a second electric contact and a third electric contact. One of these contacts is suitable to be electrically connected to a first AC line of a power supply, one of these contacts is suitable to be electrically connected to a neutral line of the power supply, and one of these contacts is suitable to be electrically connected to a ground line.

In another preferred embodiment (not shown), the charger plug 2 comprises a first electric connector 4 comprising a first electric contact, a second electric contact, a third electric contact, a fourth electric contact and a fifth electric contact. One of these contacts is suitable to be electrically connected to a first AC line of a power supply, one of these contacts is suitable to be electrically connected to a second AC line of the power supply, one of these contacts is suitable to be electrically connected to a third AC line of the power supply, one of these contacts is suitable to be electrically connected to a neutral line of the power supply, one of these contacts is suitable to be electrically connected to a ground line.

In another preferred embodiment (not shown), the charger plug 2 comprises a first electric connector 4 comprising a first electric contact, a second electric contact and a third electric contact. One of these contacts is suitable to be electrically connected to a first negative DC line of a power supply, one of these contacts is suitable to be electrically connected to a second positive DC line of the power supply and one of these contacts is suitable to be electrically connected to a ground line.

According to a specificity of these embodiments (not shown), the first electric connector 4 comprises a first communication contact and a second communication contact.

Preferably, the first electric connector 4 is a standard connector according to the standard IEC 62196-1/-2/-3.

The invention also relates to a charging station 1 comprising such a charger plug 2.

According to a preferred embodiment of the invention, the charging station 1 comprises a support 15 which bears the first electric connector 4 and the first fluid connector 9 of the charger plug 2, the first electric connector 4 and the first fluid connector 9 being connected to the support 15 by return means 16.

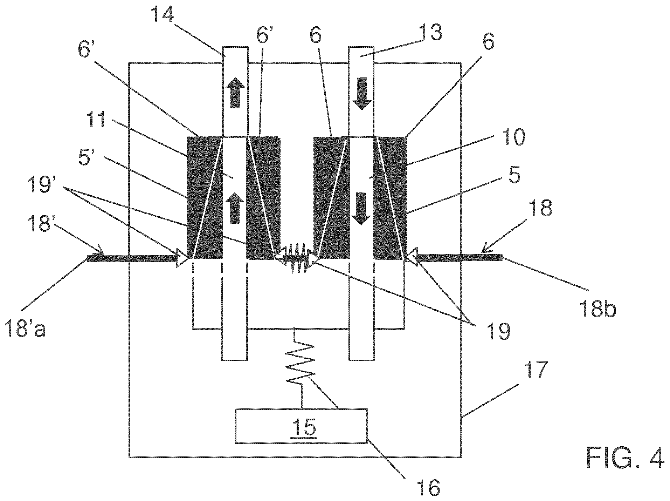

When the charger plug 2 and the charging receiver 8 are in a coupled state (figure 4), these return means 16 enable to exert a force on the first and second recesses 20, 20' to avoid the decoupling of the charger plug 2 and the charging receiver 8.

Preferably, the return means 16 consist in resilient means, for instance in a spring.

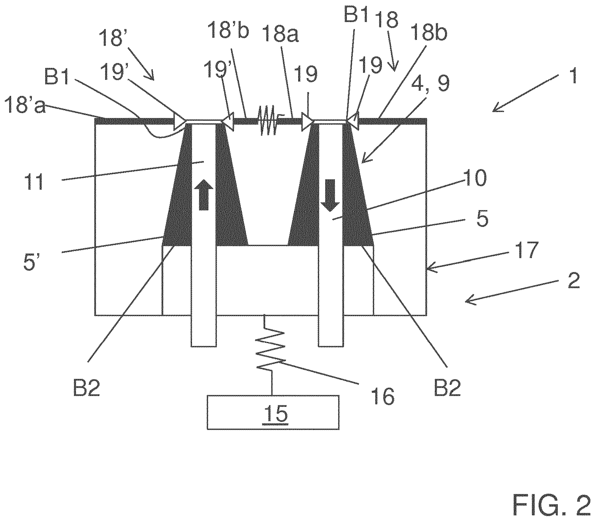

According to the invention, the charging station 1 comprises a protection housing 17 arranged to protect the charger plug 2 (figures 2, 3 and 4).

The protection housing 17 is provided to protect the charger plug 2 from the outdoor conditions, when the charging station 1 is not in used.

The protection housing 17 comprises a first protection lid 18 and a second protection lid 18' arranged to be movable between a closed or semi-closed position and an open position, the first protection lid 18 and the second protection lid 18' being arranged to move from the closed position to the open position, when the first protrusion and the second protrusion lean against the first protection lid 18 and the second protection lid 18' respectively (figures 2, 3 and 4).

This arrangement enables the automatic opening of the first and second protection lids 18, 18', when the charger plug 2 is moved outside the protection housing 17.

The first protection lid 18 and the second protection lid 18' comprise respectively first cleaning means 19 and second cleaning means 19' (figures 2, 3 and 4).

These first and second cleaning means 19, 19' are provided to clean the first and second electric contacts 5, 5', when the charger plug 2 is moved outside the protection housing 17.

Preferably, the first protection lid 18 and the second protection lid 18' each consists in a pair of shutter 18a, 18b; 18'a, 18'b. The first cleaning means 19 and second cleaning means 19' are preferably located on the edge of the shutter 18a, 18b; 18'a, 18'b.

Preferably, the first and second cleaning means 19, 19' consist in rough or sharp-edged material, such as hard plastics, metal grater, or brush like material such as metal brush, hard fiber brush.

Preferably, the charging station 1 comprises at least a power supply system (not shown) to provide electric energy.

Preferably, the charging station 1 comprises at least a supply cable (not shown) electrically connected to the charger plug 2, more particularly to the first electric connector 4 and to the power supply system.

Preferably, the charging station 1 comprises a cooling system (not shown) to maintain the battery within an acceptable temperature range during a charging session.

Preferably, the charging station 1 comprises fluid lines (not shown), which are connected on the one hand to the charger plug 2, more particularly to the first fluid inlet duct 10 and the second fluid outlet duct 11, and on the other hand to the cooling system.

The figures 1, 3, 4 and 5 show a charging receiver 8 for an electric vehicle arranged to be coupled with the charger plug 2, the charging receiver 8 comprising a second electric connector 7 arranged to be coupled with the first electric connector 4 of the charger plug 2, the second electric connector 7 comprising at least a first electric contact 6 and a second electric contact 6' arranged to be electrically coupled with corresponding first and second electric contacts 5, 5' of the first electric connector 4 of the charger plug 2, and comprising a second fluid connector 12 comprising a third fluid outlet duct 13 and a fourth fluid inlet duct 14, the second fluid connector 12 being arranged to be coupled with the corresponding first fluid connector 9 of the charger plug 2, so that the third fluid outlet duct 13 being connected with a corresponding first fluid inlet duct 10 of the first fluid connector 9 and the fourth fluid inlet duct 14 being connected with a corresponding second fluid outlet duct 11 of the first fluid connector 9,

The second electric connector 7 comprises a first recess 20 where the first electric contact 6 is located and where the third fluid outlet duct 13 leads and a second recess 20' where the second electric contact 6' is located and where the fourth fluid inlet duct 14 leads, these first and second recesses 20, 20' each comprising a reception opening 21, 21' to enable the insertion respectively of the first protrusion and the second protrusion of the charger plug 2.

This arrangement enables the simultaneous connections of the second electric connector 7 and of the second fluid connector 12 of the charging receiver 8 respectively with the first electric connector 4 and the first fluid connector 9 of the charger plug 2. Thus, the charging receiver 8 enables an improved and reliable connection. Moreover, as one electric contact 6, 6' and one fluid outlet/inlet duct 13, 14 are located on the same recess 20, 20', the size of the charging receiver 8 is decreased and thus the charging receiver 8 is compact.

According to a non-limitative specificity , the first recess 20 has a truncated cone shape and the second recess 20' has a truncated cone shape.

This particular shape of the first and second recesses 20, 20' is provided to ease the insertion of the first and second protrusions of the charger plug 2.

Preferably, the first electric contact 6 covers the external wall of the first recess 20.

Preferably, the second electric contact 6' covers the external wall of the second recess 20'.

According to another non-limitative specificity , the third fluid outlet duct 13 and the fourth fluid inlet duct 14 have a hollow cylindrical shape.

According to a non-limitative particularity of these specificities, the truncated cone shaped first recess 20 and the hollow cylindrical shaped third fluid outlet duct 13 are coaxial and the truncated cone shaped second recess 20' and the hollow cylindrical shaped fourth fluid inlet duct 14 are coaxial (figures 1, 3 to 5).

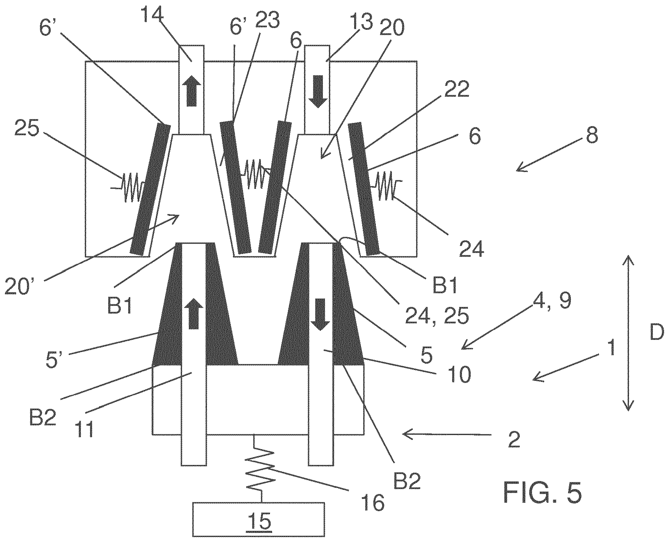

In a preferred embodiment shown in figure 5, the first recess 20 comprises a first lateral part 22 comprising the first electric contact 6 which is connected to the first lateral part 22 by return means 24 and the second recess 20' comprises a second lateral part 23 comprising the second electric contact 6' which is connected to the second lateral part 23 by return means 25.

When the charger plug 2 and the charging receiver 8 are in a coupled state, these return means 24, 25 enables to exert a force on the first and second protrusions to avoid the decoupling of the charger plug 2 and the charging receiver 8.

Preferably, the return means 24, 25 consist in resilient means, for instance in a spring.

Preferably, the electric vehicle comprises a battery (not shown).

Preferably, the electric vehicle comprises a rectifier, which connects the first AC line electrically and indirectly to the battery, and converts an alternating current (AC) current in direct current (DC), which one is required to charge the battery.

Preferably, the rectifier is part of an on board charger (not shown) of the electric vehicle.

Preferably, the electric vehicle comprises at least a supply cable (not shown), which is electrically connected to the charging receiver 8, more particularly to the second electric connector 7, and to the battery.

Preferably, the electric vehicle comprises a cooling system (not shown) to maintain the battery within an acceptable temperature range during a charging session.

Preferably, the electric vehicle comprises fluid lines (not shown), which are connected on the one hand to the charging receiver 8, more particularly to the third fluid outlet duct 13 and the fourth fluid inlet duct 14, and on the other hand to the cooling system of the electric vehicle.

In another preferred embodiment (not shown), the charging receiver 8 comprises a second electric connector 7 comprising a first electric contact, a second electric contact and a third electric contact. One of these contacts is suitable to be electrically connected to a first AC line electrically connected to the battery, one of these contacts is suitable to be electrically connected to a neutral line electrically connected to the battery, and one of these contacts is suitable to be electrically connected to a ground line.

Preferably, the first AC line is electrically and indirectly connected to the battery, by means of a rectifier, which converts an alternating current (AC) current in direct current (DC), which is required to charge the battery.

According to a non-limitative specificity of this embodiment (not shown), the second electric connector 7 comprises a fourth electric contact and a fifth electric contact. One of these contacts is suitable to be electrically connected to a first negative DC line electrically connected to the battery and one of these contacts is suitable to be electrically connected to a second positive DC line electrically connected to the battery.

Preferably, the first negative DC line and a second positive DC line are respectively electrically and directly connected to the battery.

In another preferred embodiment (not shown), the charging receiver 8 comprises a second electric connector 7 comprising a first electric contact, a second electric contact, a third electric contact, a fourth electric contact and a fifth electric contact. One of these contacts is suitable to be electrically connected to a first AC line electrically connected to the battery, one of these contacts is suitable to be electrically connected to a second AC line electrically connected to the battery, one of these contacts is suitable to be electrically connected to a third AC line electrically connected to the battery, one of these contacts is suitable to be electrically connected to a neutral line electrically connected to the battery, one of these contacts is suitable to be electrically connected to a ground line.

Preferably, the first AC line, the second AC line, the third AC line are respectively electrically and indirectly connected to the battery, by means of a rectifier, which converts an alternating current (AC) current in direct current (DC), which is required to charge the battery.

According to a non-limitative specificity of this embodiment (not shown), the second electric connector 7 comprises a sixth electric contact and an seventh electric contact. One of the contacts is suitable to be electrically connected to a first negative DC line electrically connected to the battery and one of the contacts is suitable to be electrically connected to a second positive DC line electrically connected to the battery.

Preferably, the first negative DC line and a second positive DC line are respectively electrically and directly connected to the battery.

In another preferred embodiment (not shown), the charging receiver 8 comprises a second electric connector 7 comprising a first electric contact, a second electric contact and a third electric contact. One of these contacts is suitable to be electrically connected to a first negative DC line electrically connected to the battery, one of these contacts is suitable to be electrically connected to a second positive DC line electrically connected to the battery and one of these contacts is suitable to be electrically connected to a ground line.

Preferably, the first negative DC line and a second positive DC line are respectively electrically and directly connected to the battery.

Preferably, the second electric connector 7 comprises a first communication contact and a second communication contact.

Preferably, the second electric connector 7 is a standard connector according to the standard IEC 62196-1/-2/-3.

In the coupled state, the first electric contact 5 of the charger plug 2 is in electrical contact with the first electric contact 6 of the charging receiver 8, the second electric contact 5' of the charger plug 2 is in electrical contact with the second electric contact 6' of the charging receiver 8, the first fluid inlet duct 10 of the charger plug 2 is connected to the third fluid outlet duct 13 of the charging receiver 8, the second fluid outlet duct 11 of the charger plug 2 is connected to the fourth fluid inlet duct 14 of the charging receiver 8.

Thus, the first and second electric contacts 5, 5' of the charger plug 2 and the first and second electric contacts 6, 6' of the charging receiver 8 enable an electric circulation, when respectively connected to the power supply system and to the battery by means of supply cables.

Thus, the first fluid inlet duct 10 and the second fluid outlet duct 11 of the charger plug 2, and the third fluid outlet duct 13 and the fourth fluid inlet duct 14 of the charging receiver 8 enable a coolant circulation, when respectively connected to a cooling system by way of coolant lines.

According to this arrangement, this coolant circulation enables to feed the cooling system of the electric vehicle with coolant and to extract the coolant with a higher temperature out from the electric vehicle and then cooling it in the cooling system of the charging station 1. Moreover, this arrangement enables to cool the interface between the first electric contact 5 of the charger plug 2 and the first electric contact 6 of the charging receiver 8, and the interface between the second electric contact 5' of the charger plug 2 and the second electric contact 6' of the charging receiver 8,

For instance, the coolant can be water.

## Claims

1. A charging station (1) comprising a charger plug (2) for supplying electric energy to an electric vehicle and for supplying cooling of the electric vehicle, the charger plug (2) comprising at least a first electric connector (4) comprising a first electric contact (5) and at least a second electric contact (5'), the first electric connector (4) being arranged to be coupled with a corresponding second electric connector (7) of a charging receiver (8), so that the first and second electric contacts (5, 5') being electrically connected with corresponding first and second electric contacts (6, 6') of the second electric connector (7), and comprising a first fluid connector (9) comprising a first fluid inlet duct (10) and a second fluid outlet duct (11), the first fluid connector (9) being arranged to be coupled with a corresponding second fluid connector (12) of the charging receiver (8), so that the first fluid inlet duct (10) being connected with a corresponding third fluid outlet duct (13) of the second fluid connector (12) and that the second fluid outlet duct (11) being connected with a corresponding fourth fluid inlet duct (14) of the second fluid connector (12), the first electric contact (5) being located on a first protrusion and the second electric contact (5') being located on a second protrusion, the first fluid inlet duct (10) passing through the first protrusion and the second fluid outlet duct (11) passing through the second protrusion,
the charging station (1) being **characterized in that** it comprises a protection housing (17) arranged to protect the charger plug (2), the protection housing (17) comprising a first protection lid (18) and a second protection lid (18') arranged to be movable between a closed position and an open position, the first protection lid (18) and the second protection lid (18') being arranged to move from the closed position to the open position when the first protrusion and the second protrusion lean against the first protection lid (18) and the second protection lid (18') respectively and wherein the first protection lid (18) and the second protection lid (18') comprise respectively first cleaning means (19) and second cleaning means (19') provided to clean the first and second electric contacts (5, 5'), when the charger plug (2) is moved outside the protection housing (17).

2. Charging station according to claim 1, wherein the first protrusion has a truncated cone shape and the second protrusion has a truncated cone shape.

3. Charging station according to any of claims 1 to 2, wherein the first fluid inlet duct (10) and the second fluid outlet duct (11) have a hollow cylindrical shape.

4. Charging station according to claims 2 and 3, wherein the truncated cone shaped first protrusion and the hollow cylindrical shape first fluid inlet duct (10) are coaxial and the truncated cone shaped second protrusion and the hollow cylindrical shaped second fluid outlet duct (11) are coaxial.

5. Charging station according to any of claims 1 to 4, wherein the charging station (1) comprises a support (15) which bears the first electric connector (4) and the first fluid connector (9) of the charger plug (2), the first electric connector (4) and the first fluid connector (9) being connected to the support (15) by return means (16).

## Patentansprüche

1. Ladestation (1), umfassend einen Ladestecker (2) zum Zuführen von elektrischer Energie zu einem elektrischen Fahrzeug und zum Zuführen von Kühlung des elektrischen Fahrzeugs, wobei der Ladestecker (2) zumindest einen ersten elektrischen Steckverbinder (4) umfasst, umfassend einen ersten elektrischen Kontakt (5) und zumindest einen zweiten elektrischen Kontakt (5'), wobei der erste elektrische Steckverbinder (4) angeordnet ist, um mit einem entsprechenden zweiten elektrischen Steckverbinder (7) eines Ladeempfängers (8) gekoppelt zu werden, sodass der erste und der zweite elektrische Kontakt (5, 5') mit entsprechenden ersten und zweiten elektrischen Kontakten (6, 6') des zweiten elektrischen Steckverbinders (7) elektrisch verbunden sind, und umfassend einen ersten Fluidsteckverbinder (9), umfassend einen ersten Fluideinlasskanal (10) und einen zweiten Fluidauslasskanal (11), wobei der erste Fluidsteckverbinder (9) angeordnet ist, um mit einem entsprechenden zweiten Fluidsteckverbinder (12) des Ladeempfängers (8) gekoppelt zu werden, sodass der erste Fluideinlasskanal (10) mit einem entsprechenden dritten Fluidauslasskanal (13) des zweiten Fluidsteckverbinders (12) verbunden ist und dass der zweite Fluidauslasskanal (11) mit einem entsprechenden vierten Fluideinlasskanal (14) des zweiten Fluidsteckverbinders (12) verbunden ist, wobei der erste elektrische Kontakt (5) an einem ersten Vorsprung befindlich ist und der zweite elektrische Kontakt (5') an einem zweiten Vorsprung befindlich ist, wobei der erste Fluideinlasskanal (10) den ersten Vorsprung durchläuft und der zweite Fluidauslasskanal (11) den zweiten Vorsprung durchläuft,
wobei die Ladestation (1) **dadurch gekennzeichnet ist, dass** sie ein Schutzgehäuse (17) umfasst, das angeordnet ist, um den Ladestecker (2) zu schützen, wobei das Schutzgehäuse (17) einen ersten Schutzdeckel (18) und einen zweiten Schutzdeckel (18') umfasst, die angeordnet sind, um zwischen einer geschlossenen Position und einer offenen Position bewegbar zu sein, wobei der erste Schutzdeckel (18) und der zweite Schutzdeckel (18') dazu angeordnet sind, sich von der geschlossenen Position in die offene Position zu bewegen, wenn sich der erste Vorsprung und der zweite Vorsprung gegen den ersten Schutzdeckel (18) bzw. den zweiten Schutzdeckel (18') lehnen und wobei der erste Schutzdeckel (18) und der zweite Schutzdeckel (18') erste Reinigungsmittel (19) bzw. zweite Reinigungsmittel (19') umfassen, die bereitgestellt sind, um den ersten und den zweiten elektrischen Kontakt (5, 5') zu reinigen, wenn der Ladestecker (2) aus dem Schutzgehäuse (17) heraus bewegt wird.

2. Ladestation nach Anspruch 1, wobei der erste Vorsprung eine Kegelstumpfform aufweist und der zweite Vorsprung eine Kegelstumpfform aufweist.

3. Ladestation nach einem der Ansprüche 1 bis 2, wobei der erste Fluideinlasskanal (10) und der zweite Fluidauslasskanal (11) eine Hohlzylinderform aufweisen.

4. Ladestation nach Ansprüchen 2 und 3, wobei der kegelstumpfförmige erste Vorsprung und der hohlzylinderförmige erste Fluideinlasskanal (10) koaxial sind und der kegelstumpfförmige zweite Vorsprung und der hohlzylinderförmige zweite Fluidauslasskanal (11) koaxial sind.

5. Ladestation nach einem der Ansprüche 1 bis 4, wobei die Ladestation (1) einen Träger (15) umfasst, der den elektrischen Steckverbinder (4) und den ersten Fluidsteckverbinder (9) des Ladesteckers (2) trägt, wobei der erste elektrische Steckverbinder (4) und der erste Fluidsteckverbinder (9) über Rückstellmittel (16) mit dem Träger (15) verbunden sind.

## Revendications

1. Station de charge (1) comprenant une prise de chargeur (2) pour fournir de l'énergie électrique à un véhicule électrique et pour fournir un refroidissement du véhicule électrique, la prise de chargeur (2) comprenant au moins un premier connecteur électrique (4) comprenant un premier contact électrique (5) et au moins un second contact électrique (5'), le premier connecteur électrique (4) étant agencé pour être couplé avec un second connecteur électrique correspondant (7) d'un récepteur de charge (8), de sorte que les premier et second contacts électriques (5, 5') sont connectés électriquement avec des premier et second contacts électriques correspondants (6, 6') du second connecteur électrique (7), et comprenant un premier raccord hydraulique (9) comprenant un premier conduit d'entrée de fluide (10) et un deuxième conduit de sortie de fluide (11), le premier raccord hydraulique (9) étant agencé pour être couplé à un second raccord hydraulique correspondant (12) du récepteur de charge (8), de sorte que le premier conduit d'entrée de fluide (10) est raccordé à un troisième conduit de sortie de fluide correspondant (13) du second raccord hydraulique (12), et que le deuxième conduit de sortie de fluide (11) est raccordé à un quatrième conduit d'entrée de fluide correspondant (14) du second raccord hydraulique (12), le premier contact électrique (5) étant situé sur une première saillie et le second contact électrique (5') étant situé sur une seconde saillie, le premier conduit d'entrée de fluide (10) passant à travers la première saillie et le deuxième conduit de sortie de fluide (11) passant à travers la seconde saillie,
la station de charge (1) étant **caractérisée en ce qu'**elle comprend un boîtier de protection (17) disposé pour protéger la prise de chargeur (2), le boîtier de protection (17) comprenant un premier couvercle de protection (18) et un second couvercle de protection (18') disposés pour être mobiles entre une position fermée et une position ouverte, le premier couvercle de protection (18) et le second couvercle de protection (18') étant disposés pour passer de la position fermée à la position ouverte lorsque la première saillie et la seconde saillie reposent contre le premier couvercle de protection (18) et le second couvercle de protection (18') respectivement, et dans laquelle le premier couvercle de protection (18) et le second couvercle de protection (18') comprennent respectivement des premiers moyens de nettoyage (19) et des seconds moyens de nettoyage (19') prévus pour nettoyer les premier et second contacts électriques (5, 5'), lorsque la prise de chargeur (2) est déplacée à l'extérieur du boîtier de protection (17).

2. Station de charge selon la revendication 1, dans laquelle la première saillie présente une forme de cône tronqué et la seconde saillie présente une forme de cône tronqué.

3. Station de charge selon l'une quelconque des revendications 1 et 2, dans laquelle le premier conduit d'entrée de fluide (10) et le deuxième conduit de sortie de fluide (11) présentent une forme cylindrique creuse.

4. Station de charge selon les revendications 2 et 3, dans laquelle la première saillie en forme de cône tronqué et le premier conduit d'entrée de fluide de forme cylindrique creuse (10) sont coaxiaux et la seconde saillie en forme de cône tronqué et le deuxième conduit de sortie de fluide de forme cylindrique creuse (11) sont coaxiaux.

5. Station de charge selon l'une quelconque des revendications 1 à 4, dans laquelle la station de charge (1) comprend un support (15) qui porte le premier connecteur électrique (4) et le premier raccord hydraulique (9) de la prise de chargeur (2), le premier connecteur électrique (4) et le premier raccord hydraulique (9) étant raccordés au support (15) par des moyens de retour (16).
